# EUROPEAN PATENT APPLICATION

(11) **EP 2 031 933 A1**
(43) Date of publication of application: **04.03.2009**
(21) Application number: 07468011.7
(22) Date of filing: 09.08.2007
(51) Int. Cl.: H04W 76/02

(54) **System and process for sms initiated bypass call setup from a packet based communication system to other networks**

(71) Applicant: Podpecan, Aljosa, 1230 Vienna (AT)
(72) Inventor: Podpecan, Aljosa, 1230 Vienna (AT)
(74) Representative: Djukic, Dusan

(57) **Abstract**

The present invention describes the system and process for SMS initiated bypass call setup from a packet based communication system to other networks.

The actual call setup between the said communication devices is routed through the packet network thus bypassing the main charging mechanism of both networks.

The call setup mechanism between communication device 1 and communication device 2 is initiated and triggered by the requesting subscriber communication device 1, preferably in a mobile network but not limited to such, using Short Message Service (SMS) for call setup request.

The SMS Message is sent by Communication Device 1 to a SMS Gateway and contains the address of communication Device 1 and the address of the communication Device 2 (i.e. their E.164 telephone numbers). After the SMS call setup request is received by a call setup entity, two independent calls are initiated, preferably from the packet network, one call towards each of said communication devices. These two calls are merged together, so the communication device 1 and communication device 2 are in call state with each other, both subscribers receiving incoming calls and bypassing the core switching charging in their networks.

## Description

### Field of the invention

The present invention relates to an Internet Protocol (IP) call setup mechanism between two communication devices, residing on their own networks, where a packet network connects the said two networks together.
In particular the present invention describes the basic mechanism for an SMS Initiated Call Request involving some of those network entities but is not limited to such. Particularly the same feature mechanism will work with any other type of networks rather than mobile networks.

### State of the art and technical problem

The architecture of an Internet Protocol (IP)-network incorporates several network entities to setup calls and deliver services. Such network entities are logical network elements. One or more such entities could physically reside on the same Hardware. Such logical network entities can exchange data with each other through interfaces. An Interface can be implemented in many ways such as synchronous and asynchronous message-interface or Local- or Remote Procedure call etc.
When a call is made from one communication device to another communication device, the calling party is normally authenticated and charged for making the call, while the call receiving party is charged only in some instances (receiving a call while abroad) normally at quite lower rate.

### Brief description of the invention

The actual call setup between the said communication devices is routed through the packet network thus bypassing the main charging mechanism of both networks.
The Call Setup Mechanism between Communication Device 1 and Communication Device 2 is initiated and triggered by the requesting subscriber Communication Device 1, preferably in a mobile network but not limited to such, using Short Message Service (SMS) for call setup request. The Short Message Service Message is sent by Communication Device 1 to a dedicated SMS Gateway and contains both the Address of Communication Device 1 (i.e. E.164 telephone number of Communication Device 1) and the Address of the Communication Device 2 (i.e. E.164 telephone number of Communication Device 2). After the SMS Call Setup Request received by a Call Setup Entity, this mechanism initiates two individual calls preferably from the packet network towards both Communication devices, one call towards the subscriber requested the service, and another call towards the subscriber the requestor wanted to put in a call. These two calls will be merged together, so the result is that the two subscribers Communication Device 1 and Communication Device 2 are in call state with each other.
Since both subscribers receive incoming calls, this mechanism bypasses the core switching charging in Network 1 and Network 2 and hence delivers a very cheap method for call setup. This is especially cheaper call method for mobile subscribers but is not limited to such subscribers.

For complete understanding of the invention, reference should be made to the following detailed description and accompanying drawings, showing:
- Figure 1: Overview architecture
- Figure 2: Call setup phase
- Figure 3: SMS initiated call setup in a peer to peer network
- Figure 4: Call setup phase to a PSTN network
- Figure 5: Call setup phase both PSTN networks

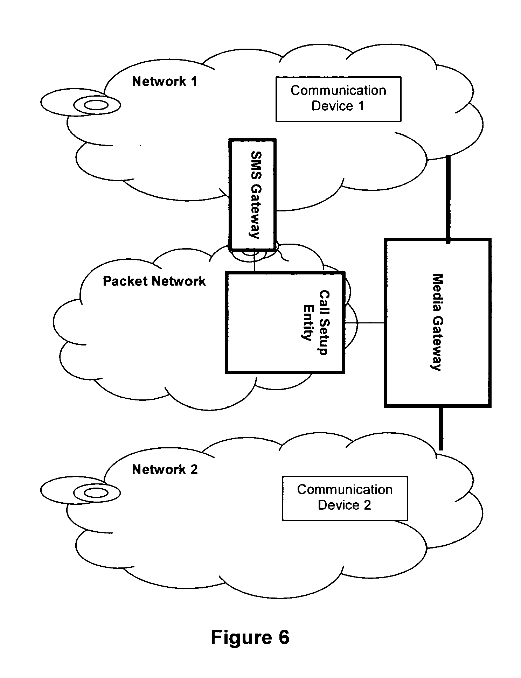

- Figure 6: Schematic overview of the system

### Description of the invention

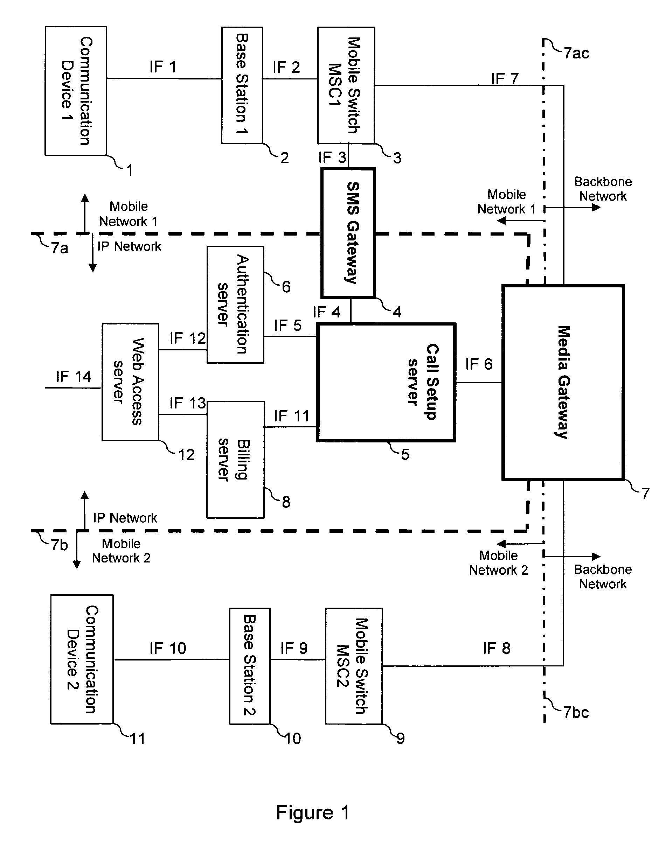

Referring to Figure 1, a Communication device 1, 11 is a device with one or more communication paths via the underlying network as an example for voice, video or other data communication and is preferably a wireless device. Such a device can be a stand-alone device or in combination with other devices examples are simple cellular phones, Personal Digital Assistant (PDA), Mobile Digital Assistant (MDA), Computer etc.

The wireless communication device 1, 11 is connected via the Air-Interface for radio transmission IF 1, IF 10 such as GSM, GPRS, UMTS etc. to a base station 2, 10. Base stations 2 and 10 are connected to the Mobile Core Switches 3 and 9.

Different networks are connected via Backbone Networks 7ac and 7bc. Such Backbone networks use as an example ISUP (ISDN User Part), SS7 which use physically Fibre Optics, Microwave Transmission etc. and enable different network providers to interconnect.

SMS Gateway 4 is a network entity connected to an arbitrary network. This network entity is capable to receive Short Message Service (SMS) from the requesting mobile network 3 and forward the received SMS via Internet Protocol (IP) over IF4 to the a Call Setup Server 5.

The IP Call Setup Server 5 can initiate calls towards connected networks. This can be done by controlling one or more Media Gateways 7 by means of standardized IP-Protocol for telephony like H.323, SIP, Megaco or H.248 or any other IP-Protocol. Optionally such a Call Setup Server 5 could also be capable to transfer established calls.

Media Gateway 7 is a network entity used to interconnect calls from Internet Protocol (IP) Networks to other networks like conventional TDM (Time Division Multiplex), ISUP, TUP etc. but not limited to, via backbone Network and vice versa.

A Call Setup Server 5 is optionally extended by an Authentication Server 6 and a Charging Server 8.

The Authentication Server 6 authenticates incoming requests and grants access to services for registered users. A non-registered user will get no access to services. Such an Authentication server 6 can contain an internal data base or can optionally access to an external data base for subscriber data and authentication check.

The optional Charging Server 8 interconnects the Call Setup Server to an already existing charging and clearing centre or acts as a stand alone charging entity which then works on its own charging methods like pre-paid, post paid etc. This server particularly collects the call data records for charging and other statistics. Such a Charging Server 8 can contain an internal data base or can optionally access to an external data base for Accounting, Call Data Records and statistics.

The optional Web Access Server 12 enables access via Web to the Authentication Server 6 and Charging Server 8 by using common Web-protocols like HTTP or HTTPS etc. IF 14.
This enables an easy way for end users to register for the service through IF 12 and to get actual Charging Data like detailed call data records IF 13.

### Service Subscription Description

An optional service registration process is needed if the service has to be provided only for registered users and/or should be charged. This registration process is described below:
Referring to Figure 1, the first (optional) step to take is to register for the service. This is done by logging into the Web Access Server 12 via a Web-Browser and protocols like HTTP, HTTPS, etc. IF 14. During registration the user enters own E.164 number for later authentication within the system and optionally fills out the necessary information for accounting and charging (i.e. Credit card information or any other payment method, etc.). During successful registration, that information will be passed to the Authentication Server 6 and
the Billing Server 8 for later Authentication and Accounting. Again the interfaces IF 12 and IF 13 could be any appropriate Internet Protocol Interface like UDP, TCP, etc. or a remote Procedure Call or even a simple storage in a data base, which can be accessed by Authentication Server 6 or Billing Server 8. This ends the registration process for a subscriber.

### Call Setup Mechanism in a non Peer to Peer network

The mechanism of call setup in a non-Peer 2 Peer network will be described by describing the operation. Assuming Communication device 1 (1) wants to initiate a SMS-triggered call to Communication device 2 (11).

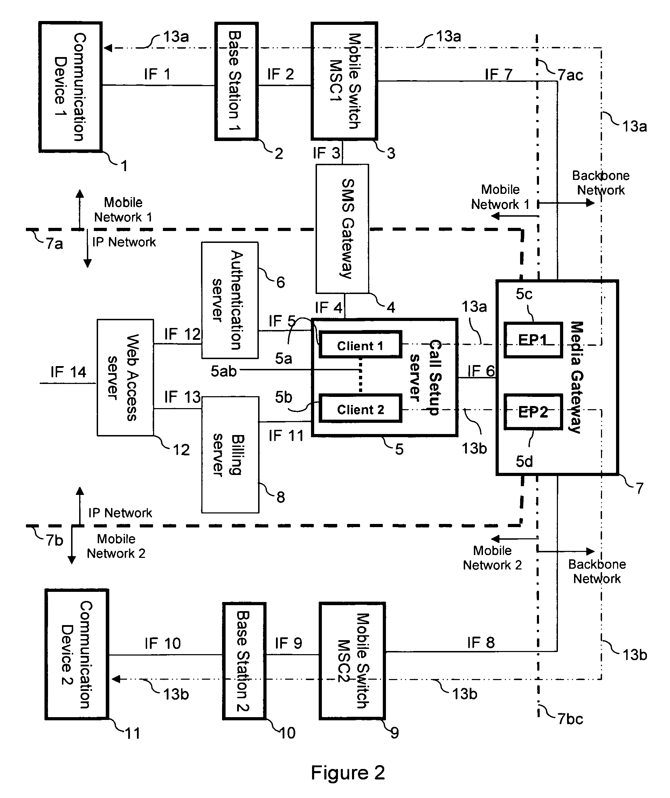

Referring to Figure 2, assuming the E.164 telephone number of Communication device 1 (1) is +49 89 100001 and the E.164 telephone number of the communication device 2 (11) is +49 89 200002.

The Communication device 1 (1) sends an SMS to the SMS-Gateway 4. The content of this SMS is the E.164 telephone number of the communication device 2 (11).

The SMS-Gateway 4 receives the SMS from Communication Device 1 (1) over a connected network (this could be any network) and sends the received SMS with corresponding SMS-data to the Call Setup Server 5 using an appropriate protocol like IP-Protocols UDP, TCP, HTTP, HTTPS etc. or by other mechanisms like Remote Procedure Call (RPC) IF 4. The type of used protocol or mechanism is not relevant for the service. It is important that the content of the received SMS-Message by SMS-Gateway 4 including header information is sent to the Call Setup Server 5. Such SMS-Message consist besides the SMS body which is in this scenario the E.164 telephone number of Communication Device 2 (11) "+49 89 200002" also the address of the SMS sender which is the E.164 telephone number of the Communication Device 1 (1) "+49 89 100001" in our scenario.

The physical location of the SMS-Gateway 4 is also not necessarily in the Mobile network 1 as depicted in Figure 1. This Gateway can be located anywhere in some network, but must be able to receive SMS Messages from the service requestor i.e. Communication Device 1 (1).

The Call Setup Server 5 is then informed over IF 4 about the service request by the SMS-Gateway 4. As described before, the information over the interface IF 4 contains both E.164 telephone numbers of Communication Device 1 (1) and Communication Device 2 (11).

Optionally the Call Setup Server 5 can initiate the authentication for the service requestor i.e. Communication Device 1 (1) by informing the Authentication Server 6 via IF 5 and pass the received data such as E.164 telephone numbers of the service requestor Communication Device 1 (1) and Communication Device 2 (11) to the Authentication server 6. Again the type of protocol of IF 5 is not important to the service. Any appropriate protocol like IP-Protocols UDP, TCP, HTTP, HTTPS etc. or other mechanisms like Remote Procedure Call (RPC), or other authentication protocols like Radius etc. can be used.

When the Authentication Server 6 is being informed by Call Setup Server 5, it looks up its data base, which as an example has been setup at registration time, if the service requestor (i.e. Communication Device 1 (1)) is authorized to use the service. For this check the E.164 telephone number of the Communication Device 1 (1) can be used, which has been received through IF 5. Other checks are also possible, as an example to check whether Communication Device 1 (1) has any restrictions for calling Communication Device 2 (11) for any reason etc. The result of this Authentication Check is then passed back to the Call Setup Server 5 via IF 5. In case of a positive response, that is the Communication Device 1 (1) is authorized to use the service the Call Setup Server proceeds further with the requested service.

Another optional step is to check the accounting information prior to start the service. For this check the Call Setup Server 5 contacts the Billing Server 8 via IF 11 using an appropriate protocol like IP-Protocols UDP, TCP, HTTP, HTTPS etc. or by other mechanisms like Remote Procedure Call (RPC). This way the information about both E.164 telephone numbers of both parties (i.e. Communication Device 1 (1) and Communication Device 2 (11)) can be passed to the Billing Server 8. The Billing Server 8 can at this point check for account data to find out if enough money available to execute the service. The result of this Check is then passed back to the Call Setup Server 5 via IF 11. In case of a positive response, that is the Accounting Information allows the usage of the service for Communication Device 1 (1) subscriber, the Call Setup Server proceeds further with the requested service.

As mentioned before the Call Setup Server 5 can operate with any VoIP protocol like H.323, SIP, Megaco, H.248, Peer2Peer etc. We assume SIP for further description, but all of the description will work with other protocols like H.323, Megaco, H.248, Peer2Peer etc. too.

Referring to Figure 2, after optional authentication and optional billing information checks, the Call Setup Server 5 initiates two independent originating calls:

Referring to Figure 2 the Call Setup Server 5 initiates a first outgoing call 13a towards the service requestor Communication Device 1 (1). For this the Call Setup Server 5 instantiates a client 1 (5a) and starts the outgoing call 13a towards Communication Device 1 (1) by sending an INVITE message to the Media Gateway 7 with the E.164 telephone number of the requestor i.e. Communication Device 1 (1) as the target address (i.e. the To-Header in SIP INVITE message is +49 89 10001 in this scenario). This leads to a call establishment via Media Gateway 7, 5c over backbone network to Mobile switch 3, IF 7, Base Station 1 (2), IF 2 and to the Communication Device 1 (1) IF 1. From the point of view of Communication Device 1 (1) this call 13a is an incoming Call. Communication Device 1 (1) begins ringing.

Referring to Figure 2, the Call Setup Server 5 initiates another call 13b towards the Communication Device 2 (11) in a similar way by instantiating Client 2 (5b) and sending an INVITE message to the Media Gateway 7 with the E.164 telephone number of the Communication Device 2 (11) as the target address (i.e. the To-Header in SIP INVITE message is +49 89 20002 in this scenario) 5d, 7bc, IF 8, IF 9, IF 10. From the point of view of Communication Device 2 (11) this call 13b is an incoming Call. Communication Device 2 (11) begins ringing.

Referring to Figure 2, the Call Setup Server 5 merges both calls 13a and 13b together as a three party call 5ab, which leads to speech path connection of both calls 13a and 13b.

When both call-parties, Communication Device 1 (1) and Communication Device 2 (11) pick up their incoming calls 13a and 13b respectively, they are in call state with each other, since the Call Setup Server 5 has made a three party call out of 13a and 13b. The third party in this three party call is then the Call Setup Server 5 itself 5a, 5b.

In the call setup phase for mentioned calls 13a and 13b towards Communication Device 1(1) and Communication Device 2 (11) respectively several options are possible:
Referring to figure 2, after establishment of the call 13a ringing and pick up of the Communication Device 1 (1), an announcement could be played to Communication Device 1 (1) indicating further processing for establishment a call to Communication device 2 (11). At this point (i.e. after pick up Communication device 1 (1)) the call establishment 13b towards Communication device 2 (11) can be started.
Another alternative is the option of Call Transfer instead of described three party Call within the Call Setup Server 5. This is when the Call Setup Server 5 initiates a Call Transfer towards the Media Gateway 7, which then leads to an internal connection of 5c and 5d within the Media Gateway 7 and speech paths of both calls 13a and 13b are connected together. Use of Call Transfer has the advantage that the resources within Call Setup Server 5 could then be freed up and are not needed during whole call. Use of three party call has advantages if features like Lawful interception or wire tapping is needed.
Both Communication Device 1 (1) and Communication Device 2 (11) have received an incoming call 13a and 13b respectively hence both underlay only the B-Party charging of their native Networks and will be charged for incoming Calls only but none of them is charged for making a call. The charging of the SMS Initiated Call Setup in above described scenario can optionally be done by use of the Billing Server 8.

### Call Setup Mechanism in a Peer to Peer Network

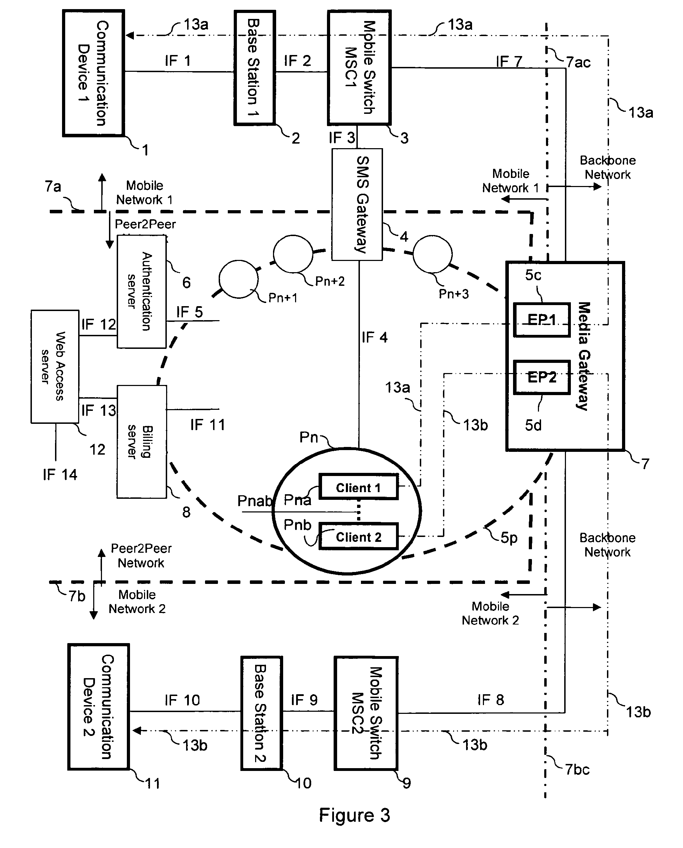

The mechanism of call setup in peer to peer network will be described by describing the operation referring to Figure 3.

Referring to Figure 3, the packet network builds a peer 2 peer network. Each subscriber within the peer to peer network Pn, Pn+1, Pn+2 etc. share a piece of information about other subscribers within the peer 2 peer network, the build peer to peer ring 5. Hence the data base of such peer to peer networks is distributed among all peers within the ring 5p. Each peer Pn, Pn+1, etc. can execute some tasks on behalf of other peers within the ring 5p. Exactly this property of such networks is being utilized herein too.

Assuming Communication device 1 (1) wants to initiate a SMS-triggered call to Communication device 2 (11) and the core packet network that will bypass this call is a peer to peer network as shown in figure 3.

Referring to Figure 3, assuming the E.164 telephone number of Communication device 1 (1) is +49 89 100001 and the E.164 telephone number of the communication device 2 (11) is +49 89 200002.

The Communication device 1 (1) sends an SMS to the SMS-Gateway 4. The content of this SMS is the E.164 telephone number of the communication device 2 (11).

The SMS-Gateway 4 receives the SMS from Communication Device 1 (1) over a connected network (this could be any network).

In case of Peer to Peer network architecture of the core Packet Network, each peer to peer subscriber (pn, pn+1, pn+2 etc.) represents a peer. The peers know from each other and are logically registered within a ring 5p. In such networks normally the network features and their execution are being distributed among the registered peers within the ring 5p.

Referring to Figure 3, after receiving an SMS, the SMS-Gateway 4 will then use an algorithm to choose a peer among all registered peers within the peer ring 5p to execute the call setup scenario similar to that described for non Peer to Peer networks. The Algorithm itself is not relevant for the operation described herein.

Referring to Figure 3, the chosen Peer Pn to execute the call setup, will be referred as Call Setup Peer Pn herein.

After choosing the Call Setup Peer Pn, the SMS-Gateway 4 sends the received SMS with corresponding SMS-data to the Call Setup Peer Pn using directly an appropriate protocol like IP-Protocols UDP, TCP, HTTP, HTTPS etc. or other mechanisms. The type of used protocol or mechanism is not relevant for the service. It is important that the content of the received SMS-Message by SMS-Gateway 4 including header information is sent to the Call Setup Peer Pn. Such SMS-Message consist besides the SMS body which is in this scenario the E.164 telephone number of Communication Device 2 (11) "+49 89 200002" also the address of the SMS sender which is the E.164 telephone number of the Communication Device 1 (1) "+49 89 100001" in our scenario.

The physical location of the SMS-Gateway 4 is also not necessarily in the Mobile network 1 as depicted in Figure 3. This Gateway can be located anywhere in some network, but must be able to receive SMS Messages from the service requestor i.e. Communication Device 1 (1).

Referring to Figure 3, the Call Setup Peer Pn is then informed about the service request by the SMS-Gateway 4. As described before, the information contains both E.164 telephone numbers of Communication Device 1 (1) and Communication Device 2 (11).

Referring to Figure 3, optionally the Call Setup Peer Pn can initiate the authentication for the service requestor i.e. Communication Device 1 (1) by informing the Authentication Server 6 via IF 5 and pass the received data such as E.164 telephone numbers of the service requestor Communication Device 1 (1) and Communication Device 2 (11) to the Authentication server 6.

Again the type of protocol of IF 5 is not important to the service. Any appropriate protocol like IP-Protocols UDP, TCP, HTTP, HTTPS etc. or other mechanisms can be used.

Referring to Figure 3, the Authentication Server 6 could be implicitly realized in the distributed database within the peer ring 5p consist of all registered peers.

In this case the Authentication server 6 will exist only logically as software logic on top of the data base within the peer ring 5p itself.

The type of implemented Authentication Server is not relevant for the execution of the service.

When the Authentication Server 6 is being informed by the Call Setup peer Pn, it looks up its data base, which as an example has been setup at registration time, if the service requestor (i.e. Communication Device 1 (1)) is authorized to use the service. For this check the E.164 telephone number of the Communication Device 1 (1) can be used, which has been received through IF 5. Other checks are also possible, as an example to check whether Communication Device 1 (1) has any restrictions for calling Communication Device 2 (11) for any reason etc. The result of this Authentication Check is then passed back to the Call Setup Peer Pn.

In case of a positive response, that is the Communication Device 1 (1) is authorized to use the service, the Call Setup Peer Pn proceeds further with the requested service.

Another optional step is to check the accounting information prior to start the service. For this check the Call Setup Peer **Pn** contacts the Billing Server 8 via IF 11 using an appropriate protocol like IP-Protocols UDP, TCP, HTTP, HTTPS etc. or by other mechanisms. This way the information about both E.164 telephone numbers of both parties (i.e. Communication Device 1 (1) and Communication Device 2 (11)) can be passed to the Billing Server 8. The Billing Server 8 can at this point check for account data to find out if enough money available to execute the service. The result of this Check is then passed back to the Call Setup Peer Pn.

In case of a positive response, that is the Accounting Information allows the usage of the service for Communication Device 1 (1) subscriber, the Call Setup Peer Pn proceeds further with the requested service.

Referring to Figure 3, again the Billing Server 8 could be implicitly realized within in the distributed database in the peer ring 5 consist of all registered peers.

In this case the Billing server 8 will exist only logically as Software logic on top of the data base within the peer ring itself. The type of implemented Billing Server is not relevant for the execution of the service.

Referring to Figure 3, after optional authentication and optional billing information checks, the Call Setup Peer Pn initiates two independent originating calls:
Referring to Figure 3 the Call Setup Peer Pn initiates a first outgoing call 13a towards the service requestor Communication Device 1 (1). For this the Call Setup Peer Pn instantiates a client 1 (Pna) and starts the outgoing call 13a towards Communication Device 1 (1) by using Peer 2 Peer Call Setup message to the Media Gateway 7 with the E.164 telephone number of the requestor i.e. Communication Device 1 (1) as the target address. This leads to a call establishment via Media Gateway 7, 5c over backbone network to Mobile switch 3, IF 7, Base Station 1 (2), IF 2 and to the Communication Device 1 (1) IF 1. From the point of view of Communication Device 1 (1) this call 13a is an incoming Call. Communication Device 1 (1) begins ringing.
Referring to Figure 3, the Call Setup Peer Pn initiates another call 13b towards the Communication Device 2 (11) in a similar way by instantiating Client 2 (Pnb) by using Peer to Peer Call Setup message to the Media Gateway 7 with the E.164 telephone number of the Communication Device 2 (11) as the target address 5d, 7bc, IF 8, IF 9, IF 10. From the point of view of Communication Device 2 (11) this call 13b is an incoming Call. Communication Device 2 (11) begins ringing.
Referring to Figure 3, the Call Setup Peer Pn merges both calls 13a and 13b together as a three party call Pnab, which leads to speech path connection of both calls 13a and 13b.
When both call-parties, Communication Device 1 (1) and Communication Device 2 (11) pick up their incoming calls 13a and 13b respectively, they are in call state with each other, since the Call Setup Peer Pn has made a three party call out of 13a and 13b. The third party in this three party call is then the Call Setup Peer Pn itself Pnab.
In the call setup phase for mentioned calls 13a and 13b towards Communication Device 1(1) and Communication Device 2 (11) respectively several options are possible:
   Referring to figure 3, after establishment of the call 13a ringing and pick up of the Communication Device 1 (1), an announcement could be played to Communication Device 1 (1) indicating further processing for establishment a call to Communication device 2 (11). At this point (i.e. after pick up Communication device 1 (1)) the call establishment 13b towards Communication device 2 (11) can be started.
   Another alternative is the option of Call Transfer instead of described three party call within the Call Setup Peer Pn. This is when the Call Setup Peer Pn initiates a Call Transfer towards the Media Gateway 7, which then leads to an internal connection of 5c and 5d within the Media Gateway 7 and speech paths of both calls 13a and 13b are connected together. Use of Call Transfer has the advantage that the resources within Call Setup Peer Pn could then be freed up and are not needed during whole call. Use of three party call has advantages if features like Lawful interception or wire tapping is needed. Both Communication Device 1 (1) and Communication Device 2 (11) have received an incoming call 13a and 13b respectively hence both underlay only the B-Party charging of their native Networks and will be charged for incoming Calls only but none of them is charged for making a call. The charging of the SMS Initiated Call Setup in above described scenario can optionally be done by use of the Billing Server 8.

### Call Setup Mechanism to a PSTN Network

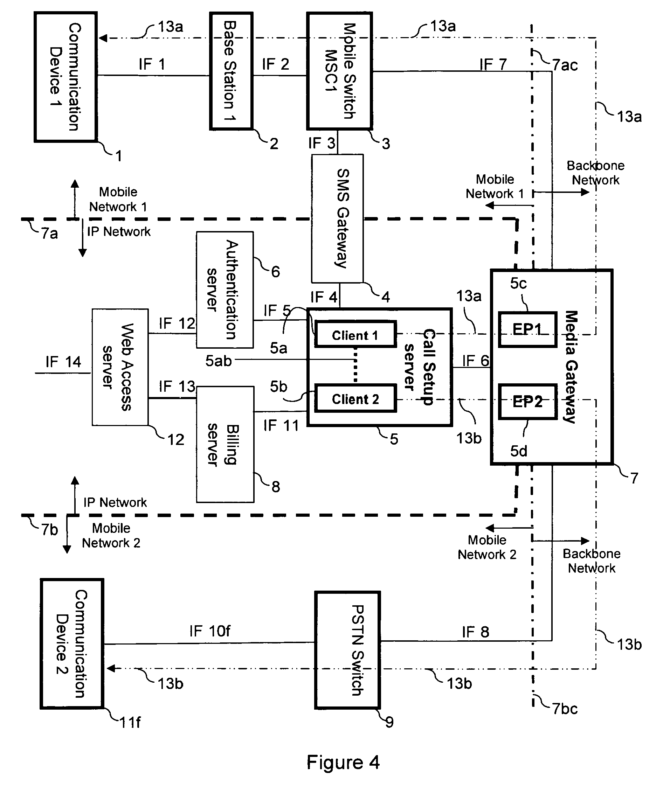

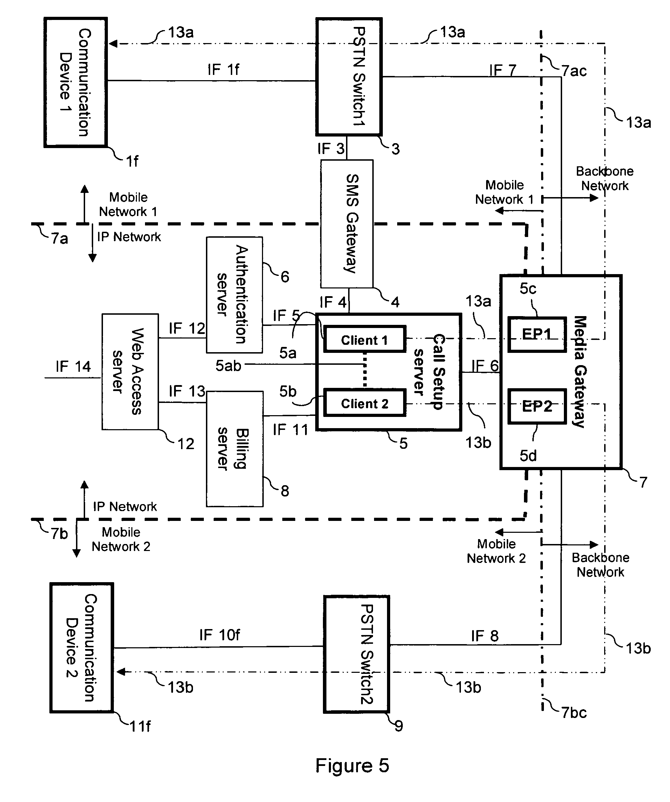

The mechanism of call setup to a PSTN Network instead to a Mobile Network is the same as described. The only difference referring to figure 4, is that Communication devices in Fixed Networks use other interfaces to connect to their corresponding switches.
Referring to figure 4, the communication device 2 (11f) uses the wire interface IF 10f to connect to the Switch 9. IF 10f can be any conventional interface like analog, ISDN, SIP, H.323 etc.
Referring to figure 5, also communication device 1 (1f) can be a Fixed network subscriber. In this case also the communication device 1 (1f) is connected via wire interface IF 1f to the corresponding PSTN Switch 2.

The invention has been described with references to concrete implementation figures. Anyone skilled in the art will find further features and advantages of the invention based on the above-described embodiments. For example, specific features from any of the embodiments described may be incorporated into systems or methods of the invention in a variety of combinations.
Accordingly, the invention is not to be limited by what has been particularly shown and described, except as defined by the scope of the enclosed claims.

## Claims

1. System for SMS initiated bypass call setup from a packet based communication system to other networks, comprising mobile network 1, which is the local network of communication device 1 (1), mobile network 2, which is the local network of communication device 2 (11) and media gateway (7), connected via backbone (7ac, 7bc) to the two mobile networks and optionally an authentication server (6) and/or a billing server (8) and/or a web access server (12), **characterized in that** it further includes SMS gateway (4) and a packet network which comprises a call setup entity (5), where the said SMS gateway (4) receives a SMS message from a communication device (1) requesting a call setup with another communication device (11), and sends it to the said call setup entity (5), which triggered by the said SMS message, sets up one independent call (13a) from packet network towards the communication device requesting a call setup (1) and another independent call (13b) from packet network towards the communication device to be called (11), and merges the calls together in a way so that a bi-directional speech path between said communication device 1 (1) and said communication Device 2 (11) is possible.

2. System according to claim 1, **characterized in that** the said packet network is a peer to peer packet network (5p) and that the call setup entity is a call setup peer (pn) chosen by the SMS gateway (4).

3. System according to claim 1 or 2, **characterized in that** the communication device 1 (1f) and/or communication device 2(11f) reside in a fixed network.

4. Process for SMS initiated bypass call setup from a packet based communication system to other networks, **characterized in that** the SMS gateway (4) receives a SMS message from a communication device (1) requesting a call setup with another communication device (11), and sends it to the said call setup entity (5), which triggered by the said SMS message, sets up one independent call (13a) from packet network towards the communication device requesting a call setup (1) and another independent call (13b) from packet network towards the communication device to be called (11), and merges the calls together in a way so that a bi-directional speech path between said communication device 1 (1) and said communication Device 2 (11) is possible.

5. Process according to claim 4, **characterized in that** the said call setup entity (5) initiates authentication of the communication device 1 (1) at the authentication server (6) and/or at the billing server (8), before setting up the said calls.

6. Process according to claims 4 and 5, **characterized in that** the said packet network is a peer to peer packet network (5p) and that the call setup entity is a call setup peer (pn) chosen by the SMS gateway (4).

7. Process according to any of the claims 4, 5 and 6, **characterised in that** the call setup entity (5, pn) initiates a call transfer towards the media gateway (7), which then leads to an internal connection (5c, 5d) within the media gateway (7) and speech paths of both calls (13a, 13b) are connected together.

8. Process according to any of the claims 4, 5, 6 and 7, **characterized in that** the SMS message sent by Communication Device 1 (1, 1f)) to the said SMS Gateway (4) contains the address of communication Device 1 (i.e. E.164 telephone number of communication Device 1) and the address of the communication device 2 (i.e. E.164 telephone number of Communication Device 2).

## Amended claims

### Amended claims in accordance with Rule 137(2) EPC.

**1.** System for SMS initiated bypass call setup from a packet based communication system to other networks, comprising mobile network 1, which is the local network of communication device 1 (1), mobile network 2, which is the local network of communication device 2 (11) and media gateway (7), connected via backbone (7ac, 7bc) to the two mobile networks and optionally an authentication server (6) and/or a billing server (8) and/or a web access server (12), **characterised in that** it further includes SMS gateway (4) and a packet network which comprises a call setup entity (5), where the said SMS gateway (4) receives a SMS message from a communication device (1) requesting a call setup with another communication device (11), and sends it to the said call setup entity (5), which triggered by the said SMS message, sets up one independent call (13a) from packet network towards the communication device requesting a call setup (1) and another independent call (13b) from packet network towards the communication device to be called (11), and merges the calls together in a way so that a bi-directional speech path between said communication device 1 (1) and said communication Device 2 (11) is possible.

**2.** System according to claim 1, **characterized in that** the said packet network is a peer to peer packet network (5p) and that the call setup entity is a call setup peer (pn) chosen by the SMS gateway (4).

**3.** System according to claim 1 or 2, **characterized in that** the communication device 1 (1f) and/or communication device 2(11f) reside in a fixed network.

**4.** Process for SMS initiated bypass call setup from a packet based communication system to other networks, **characterized in that** the SMS gateway (4) receives a SMS message from a communication device (1) requesting a call setup with another communication device (11), and sends it to the said call setup entity (5), which triggered by the said SMS message, sets up one independent call (13a) from packet network towards the communication device requesting a call setup (1) and another independent call (13b) from packet network towards the communication device to be called (11), and merges the calls together in a way so that a bi-directional speech path between said communication device 1 (1) and said communication Device 2 (11) is possible.

**5.** Process according to claim 4, **characterized in that** the said call setup entity (5) initiates authentication of the communication device 1 (1) at the authentication server (6) and/or at the billing server (8), before setting up the said calls.

**6.** Process according to claims 4 and 5, **characterized in that** the said packet network is a peer to peer packet network (5p) and that the call setup entity is a call setup peer (pn) chosen by the SMS gateway (4).

**7.** Process according to any of the claims 4, 5 and 6, **characterised in that** the call setup entity (5, pn) initiates a call transfer towards the media gateway (7), which then leads to an internal connection (5c, 5d) within the media gateway (7) and speech paths of both calls (13a, 13b) are connected together.

**8.** Process according to any of the claims 4, 5, 6 and 7, **characterized in that** the SMS message sent by Communication Device 1 (1, 1f)) to the said SMS Gateway (4) contains the address of communication Device 1 (i.e. E.164 telephone number of communication Device 1) and the address of the communication device 2 (i.e. E.164 telephone number of Communication Device 2).
